(19) Europäisches Patentamt
European Patent Office
Office européen des brevets

(11) **EP 4 741 919 A1**

(12) **EUROPEAN PATENT APPLICATION**
published in accordance with Art. 153(4) EPC

(43) Date of publication:
**13.05.2026 Bulletin 2026/20**

(21) Application number: **24911573.4**

(22) Date of filing: **28.12.2024**

(51) International Patent Classification (IPC):
***G03B 13/34*** (2021.01)

(52) Cooperative Patent Classification (CPC):
**G02B 7/04; G03B 11/04; G03B 13/34; G03B 17/02; G03B 30/00; H04N 23/67**

(86) International application number:
**PCT/CN2024/143471**

(87) International publication number:
**WO 2025/140659 (03.07.2025 Gazette 2025/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.12.2023 CN 202311866430**

(71) Applicant: **Huawei Technologies Co., Ltd.**
**Shenzhen, Guangdong 518129 (CN)**

(72) Inventor: **LV, Yali**
**Shenzhen, Guangdong 518129 (CN)**

(74) Representative: **MERH-IP Matias Erny Reichl Hoffmann**
**Patentanwälte PartG mbB**
**Paul-Heyse-Straße 29**
**80336 München (DE)**

(54) **FOCUSING METHOD AND ELECTRONIC DEVICE**

(57)     A focusing method and an electronic device (100) are provided. The electronic device (100) includes a camera cover that can move independent of a camera module. The electronic device (100) may dynamically adjust a movement track of a focus motor based on movement of the camera cover, and balance a relative position between the camera cover and the focus motor, thereby implementing quick focusing after a camera application is started, and reducing collision between the focus motor and the camera cover.

FIG. 8A

EP 4 741 919 A1

CONT.
FROM
FIG. 8A

CONT.
FROM
FIG. 8A

S817: Detect that the camera cover moves to a position Y2

S818: Determine whether Y1 is less than Y2

No

Yes

S819: Determine whether a distance between X and Y2 is less than the first distance

No

Yes

S820: Continue to move the camera cover toward the target position Y, and move the focus motor toward a position X2, where a distance between X2 and Y2 is greater than or equal to the first distance

S821: Detect a position of the camera cover at intervals, and move the focus motor based on a relationship between the position of the camera cover and the target position X, so that the focus motor moves to the target position X

FIG. 8B

## Description

This application claims priority to Chinese Patent Application No. 202311866430.7, filed with the China National Intellectual Property Administration on December 29, 2023, and entitled "FOCUSING METHOD AND ELECTRONIC DEVICE", which is incorporated herein by reference in its entirety.

## TECHNICAL FIELD

This application relates to the field of terminal technologies, and in particular, to a focusing method and an electronic device.

## BACKGROUND

Currently, a user has an increasing demand for using a camera application in an electronic device such as a mobile phone. For example, the user expects that the camera application can perform quick and accurate focusing after being started. A camera module of the electronic device includes a lens and a focus motor. The electronic device pushes the lens by using the focus motor to implement focusing. Because it takes some time for the focus motor to push the lens to move to a target position, a focusing speed of the camera application is low.

## SUMMARY

This application provides a focusing method and an electronic device. In the method, a focus motor may be moved based on movement of a camera cover, and a relative position between the camera cover and the focus motor are balanced, to implement quick focusing after a camera application is started, and reduce collision between the focus motor and the camera cover.

According to a first aspect, this application provides a focusing method. The method may be applied to an electronic device, the electronic device includes a camera module and a camera cover, and the camera module includes a focus motor. The electronic device starts a camera application, and determines a first target position to which the focus motor is to move; the electronic device moves the camera cover; and when the camera cover moves to a first position and a distance between the first position and the first target position is greater than or equal to a first distance, the electronic device moves the focus motor to the first target position, where the first position is less than a target position of the camera cover.

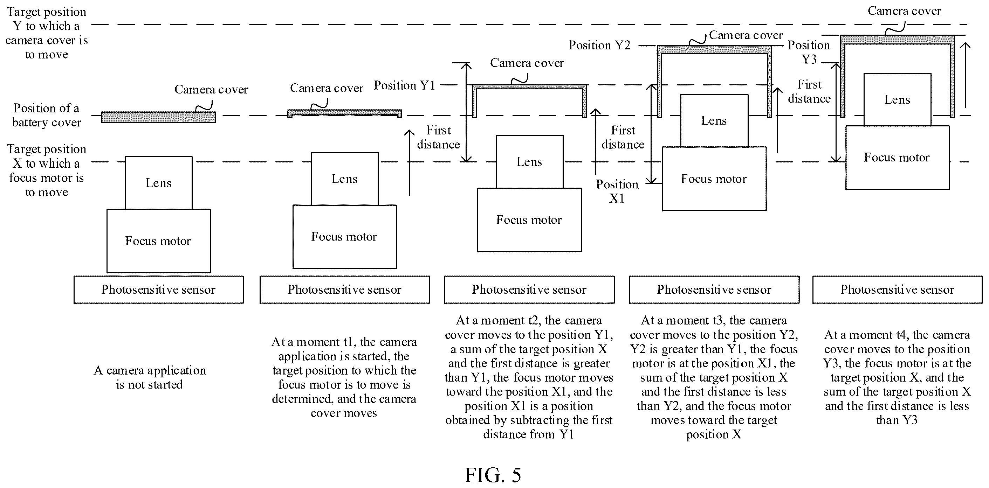

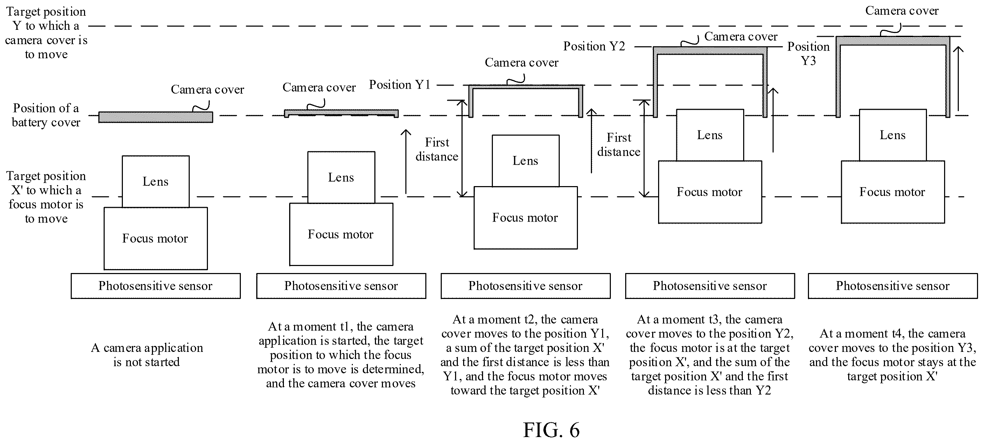

For the first target position to which the focus motor is to move, refer to the target position X shown in FIG. 5 or the target position X' shown in FIG. 6 in this application.

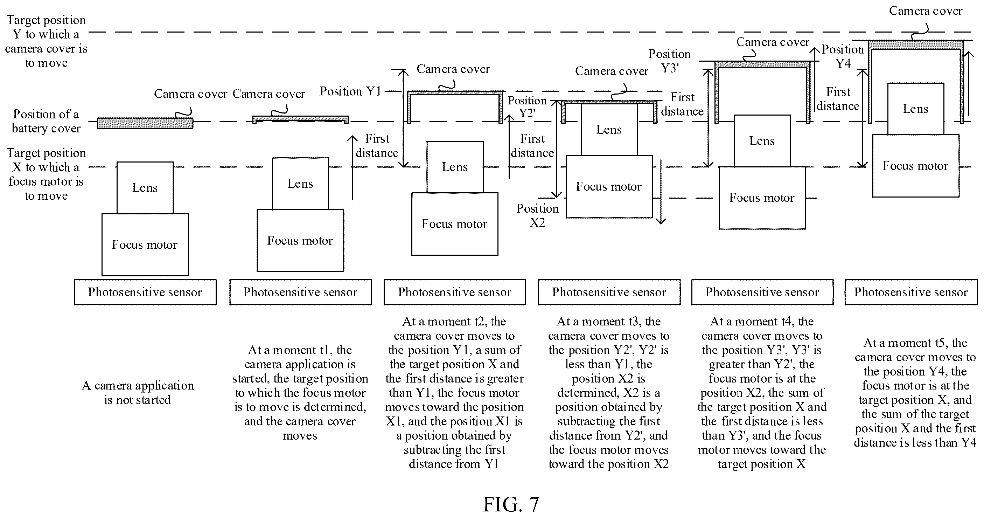

The camera cover moves to the first position. For the first position, refer to the position Y2 shown in FIG. 5, the position Y1 shown in FIG. 6, or the position Y3' shown in FIG. 7 in this application. For the target position of the camera cover, refer to target positions Y shown in FIG. 5 to FIG. 7 in this application.

The first distance can ensure that the camera module does not collide with the camera cover.

That the first position is less than the target position of the camera cover may indicate that the first position is closer to an initial position of the camera cover than the target position of the camera cover. The initial position of the camera cover may be a position of the camera cover when the camera application is not started. For the initial position of the camera cover, refer to positions of the battery cover shown in FIG. 5 to FIG. 7 in this application.

It can be learned that the electronic device may move the focus motor based on a moving position of the camera cover. Before the camera cover moves to the target position of the camera cover, if the moving position of the camera cover can avoid collision between the camera module and the camera cover after the focus motor moves to the first target position, the electronic device may quickly move the focus motor to the first target position, to implement focusing. In this way, the electronic device may move the focus motor without waiting for the camera cover to move to the target position of the camera cover. According to the foregoing method, quick focusing after the application is started can be implemented, and collision between the camera module and the camera cover can be reduced.

With reference to the first aspect, in some embodiments, before the camera cover moves to the first position, when the camera cover moves to a second position and a distance between the second position and the first target position is less than the first distance, the electronic device moves the focus motor to a third position, where a distance between the second position and the third position is greater than or equal to the first distance.

For the second position, refer to the position Y1 shown in FIG. 5 or FIG. 7, or the figure in this application. For the third position, refer to the position X1 shown in FIG. 5 or FIG. 7 in this application.

It can be learned that, in a process in which the camera cover moves toward the target position of the camera cover, the electronic device may move the focus motor for a plurality of times based on moving positions of the camera cover at different moments. If a moving position of the camera cover causes the camera module to collide with the camera cover after the focus motor moves to the first target position, the electronic device may first move the focus motor to a safety position corresponding to the current position of the camera cover. The safety position can avoid collision between the camera module and the camera cover after the focus motor moves to the first target position. In the foregoing embodiment, the focus motor may gradually move to the target position of the focus motor on a basis of reducing collision between the camera cover and the focus motor. In this way, collision between the camera cover and the focus motor can be reduced, and focusing efficiency present after the camera application is started can also be improved.

With reference to the first aspect, in some embodiments, before the camera cover moves to the first position, in a process in which the focus motor moves toward the third position, the electronic device continues to move the camera cover; and when the camera cover moves to a fourth position, and a distance between the fourth position and the third position is less than the first distance, the electronic device moves the focus motor to a fifth position, where a distance between the fourth position and the fifth position is greater than or equal to the first distance.

For the fourth position, refer to the position Y2' shown in FIG. 7 in this application. For the fifth position, refer to the position X2 shown in FIG. 7 in this application.

It can be learned from the foregoing embodiment that, when the camera cover moves to the second position, the distance between the second position and the third position is greater than or equal to the first distance. However, the distance between the fourth position and the third position is less than the first distance. Therefore, that the camera cover moves from the second position to the fourth position may indicate that the camera cover retracts, that is, moves in a direction opposite to the target position of the camera cover. The direction opposite to the target position of the camera cover is a direction of the focus motor.

It can be learned that, in a moving process of the camera cover, the electronic device may detect whether the camera cover moves in the direction of the focus motor. When detecting that the camera cover moves in the direction of the focus motor, the electronic device may adjust a position of the focus motor, and move the focus motor in a direction away from the camera cover, to reduce collision between the focus motor and the camera cover.

With reference to the first aspect, in some embodiments, after the camera cover moves to the fourth position, the electronic device displays first prompt information, where the first prompt information is used to inform a user that an exception occurs in movement of the camera cover.

Movement of the camera cover in the direction of the focus motor may be caused by an accidental touch of the user on the camera cover. The prompt information for informing the user that the exception occurs in movement of the camera cover can reduce a case in which the camera cover collides with the focus motor because the user accidentally touches the camera cover.

With reference to the first aspect, in some embodiments, before the camera cover moves to the first position, in a process in which the focus motor moves toward the third position, the electronic device continues to move the camera cover; and when the camera cover moves to a sixth position, a distance between the sixth position and the third position is greater than the distance between the second position and the third position, and a distance between the sixth position and the first target position is less than the first distance, the electronic device moves the focus motor to a seventh position, where a distance between the sixth position and the seventh position is greater than or equal to the first distance.

With reference to the first aspect, in some embodiments, before the camera cover moves to the sixth position, when the focus motor moves to the third position, the electronic device pauses movement of the focus motor.

It can be learned that before the focus motor moves to the target position of the focus motor, the electronic device may move, for a plurality of times based on moving positions of the camera cover, the focus motor to a position at which the camera module does not collide with the camera cover. In addition, after the focus motor moves to the position at which the camera module does not collide with the camera cover, the focus motor may pause movement, and wait for a next-time moving position of the camera cover to determine how to move subsequently. In this way, collision between the camera module and the camera cover can be better avoided when the camera application is started for focusing.

With reference to the first aspect, in some embodiments, after the electronic device starts the camera application, the electronic device starts to move the focus motor after a first time period of starting to move the camera cover, or starts to move the camera cover and the focus motor simultaneously.

With reference to the first aspect, in some embodiments, after the camera cover moves to the first position, the electronic device continues to move the camera cover until moving the camera cover to the target position of the camera cover. It can be learned that movement of the camera cover may be independent of the camera module. When the camera application is started, the camera cover may move to the target position of the camera cover based on a preset speed and track, and stay at the target position of the camera cover before the camera application is closed.

With reference to the first aspect, in some embodiments, after moving the camera cover to the target position of the camera cover, the electronic device keeps the camera cover at the target position of the camera cover; and when the target position to which the focus motor is to move changes from the first target position to a third target position, the electronic device moves the focus motor to the third target position.

It can be learned that the target position of the camera cover is a farthest position to which the camera cover can move. When the camera cover is at the target position of the camera cover, the camera cover does not collide with the camera module. After the camera cover moves to the target position of the camera cover, the electronic device may stop detecting a position of the camera cover, and directly move the focus motor to a corresponding target position. In the foregoing embodiment, power consumption of the electronic device can be reduced.

With reference to the first aspect, in some embodiments, the first distance is a safety distance between the focus motor and the camera cover. When the focus motor moves to the first distance, the camera module may not collide with the camera cover.

According to a second aspect, this application provides an electronic device. The electronic device may include a camera module, a camera cover, a memory, and a processor. The camera module may be configured to shoot an image. The camera module may include a lens and a focus motor. The focus motor may be configured to push the lens to implement focusing. The camera cover may be configured to: provide moving space for the camera module and protect an internal structure of the electronic device. The memory may be configured to store a computer program. The processor may be configured to invoke the computer program, so that the electronic device performs the method according to any possible implementation of the first aspect.

According to a third aspect, this application provides a computer-readable storage medium, including instructions. When the instructions are run on an electronic device, the electronic device is enabled to perform the method according to any possible implementation of the first aspect.

According to a fourth aspect, this application provides a computer program product. The computer program product may include computer instructions. When the computer instructions are run on an electronic device, the electronic device is enabled to perform the method according to any possible implementation of the first aspect.

According to a fifth aspect, this application provides a chip. The chip is used in an electronic device. The chip includes one or more processors. The processor is configured to invoke computer instructions, so that the electronic device performs the method according to any possible implementation of the first aspect.

It may be understood that the electronic device provided in the second aspect, the computer-readable storage medium provided in the third aspect, the computer program product provided in the fourth aspect, and the chip provided in the fifth aspect are all configured to perform the method provided in embodiments of this application. Therefore, for beneficial effects that can be achieved by the electronic device, the computer-readable storage medium, the computer program product, and the chip, refer to the beneficial effects in the corresponding methods. Details are not described herein again.

**BRIEF DESCRIPTION OF DRAWINGS**

FIG. 1 is a diagram of lens imaging according to an embodiment of this application;
FIG. 2A and FIG. 2B are diagrams of camera modules according to embodiments of this application;
FIG. 3 is a diagram of a structure of an electronic device 100 according to an embodiment of this application;
FIG. 4 is a block diagram of a software structure of an electronic device 100 according to an embodiment of this application;
FIG. 5 to FIG. 7 are diagrams of some focusing scenarios according to embodiments of this application; and
FIG. 8A and FIG. 8B are a flowchart of a focusing method according to an embodiment of this application.

**DESCRIPTION OF EMBODIMENTS**

The following describes the technical solutions in embodiments of this application with reference to the accompanying drawings in embodiments of this application. In the descriptions of embodiments of this application, terms used in the following embodiments are merely intended to describe specific embodiments, but are not intended to limit this application. The terms "one", "the", "the foregoing", "this", and "the one" of singular forms used in this specification and the appended claims of this application are also intended to include expressions such as "one or more", unless otherwise specified in the context clearly. It should be further understood that, in the following embodiments of this application, "at least one" and "one or more" mean one or more (including two). The term "and/or" is used to describe an association relationship between associated objects and indicates that three relationships may exist. For example, A and/or B may indicate the following cases: Only A exists, both A and B exist, and only B exists, where A and B may be singular or plural. The character "/" usually indicates an "or" relationship between the associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner. The term "connection" includes a direct connection and an indirect connection, unless otherwise specified. The terms "first" and "second" are intended only for description, and shall not be understood as an indication or implication of relative importance or an implicit indication of a quantity of indicated technical features.

In embodiments of this application, words such as "example" or "for example" indicate giving an example, an illustration, or descriptions. Any embodiment or design scheme described as an "example" or "for example" in embodiments of this application should not be construed as being more preferred or more advantageous than another embodiment or design scheme. Exactly, use of the term "example", "for example", or the like is intended to present a related concept in a specific manner.

For ease of understanding, some concepts of camera focusing are described herein.

1. Object distance

The object distance may indicate a distance from a shot object to a lens for image shooting.

2. Image distance

The image distance may indicate a distance from an imaging plane to a lens for image shooting. The imaging plane may be referred to as a name, for example, an image plane.

3. Focus

The focus may indicate a convergence point that is on an optical axis and that is of light passing through a lens and parallel to the optical axis. The optical axis may also be referred to as a principal optical axis.

4. Focal length

The focal length may indicate a distance between a lens center and a focus. A longer focal length indicates that a camera can shoot an object at a longer distance. In some embodiments, the focal length of the camera is adjustable. An electronic device may adjust the focal length of the camera in a manner of physical zoom, electronic zoom, or the like.

A relationship between the object distance, the image distance, and the focal length may be indicated by using a Gaussian imaging formula:

$$\frac{1}{u} + \frac{1}{v} = \frac{1}{f}$$

Herein, u indicates the object distance, v indicates the image distance, and f indicates the focal length.

When the object distance, the image distance, and the focal length meet the foregoing Gaussian imaging formula, the electronic device may focus on a shot object at a position corresponding to the object distance, so that the shot object is clearly imaged on the imaging plane.

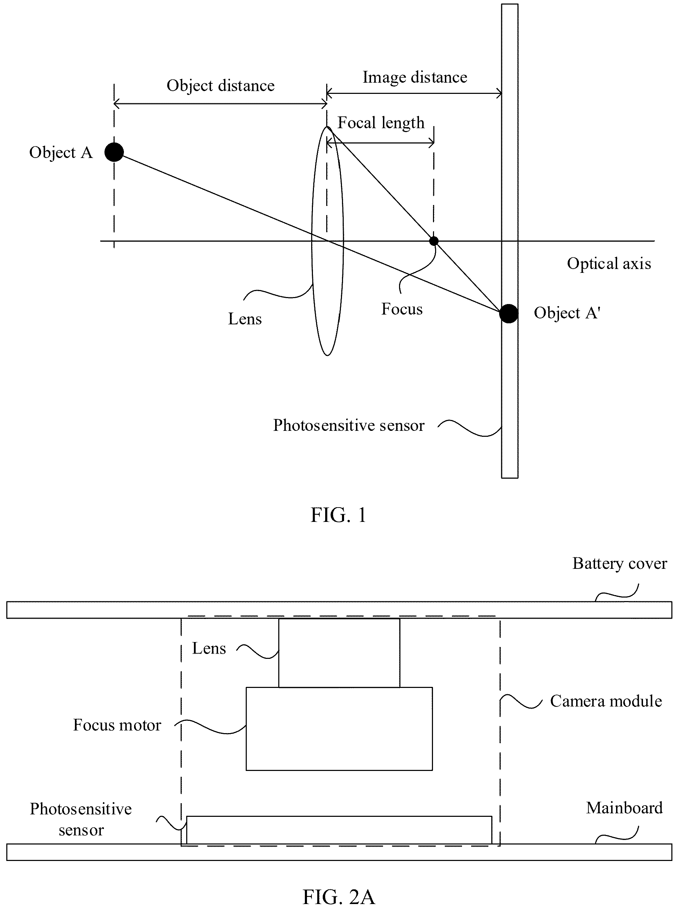

FIG. 1 is an example of a diagram of lens imaging.

As shown in FIG. 1, a lens may be configured to: receive an optical signal and converge the optical signal on a photosensitive sensor. The photosensitive sensor may be configured to convert the optical signal into an electrical signal, to implement imaging of a shot object. For example, the photosensitive sensor may include a charge-coupled device (charge-coupled device, CCD). A plane on which the photosensitive sensor is located may be referred to as an image plane. An object A may be the shot object. The object A may be imaged as an object A' on the photosensitive sensor through the lens. A distance between the object A and the lens is an object distance. When the object distance changes, an electronic device needs to adjust an image distance and/or a focal length, so that the object A can be clearly imaged on the photosensitive sensor.

For example, when the object A is away from the lens, the object distance increases; and when the focal length remains unchanged, the electronic device needs to move the lens to reduce the image distance, to focus on the object A. When the object A is away from the lens, the object distance decreases; and when the focal length remains unchanged, the electronic device needs to move the lens to increase the image distance, to focus on the object A.

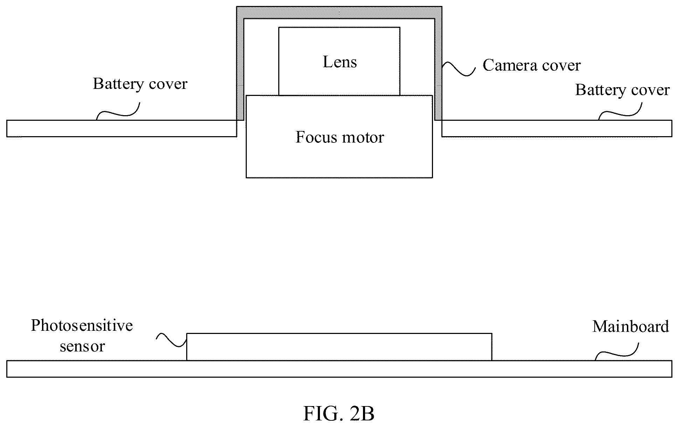

FIG. 2A and FIG. 2B show examples of diagrams of camera modules.

As shown in FIG. 2A, a camera module may include a lens, a focus motor, and a photosensitive sensor. The lens may be a lens group including a plurality of lenses. In some embodiments, a focal length of the lens group may be changed through adjustment of a relative position relationship between the plurality of lenses. When the focal length is fixed, the focus motor may push all lenses in the camera module to move as a whole, to adjust an image distance to implement focusing. The camera module may be built in an electronic device, and is located between a battery cover and a mainboard of the electronic device. The camera module may be snap-fitted to the mainboard. The camera module may also be referred to as a camera module.

The battery cover of the electronic device may also be referred to as a rear housing or a rear cover, and may be configured to protect an internal structure of the electronic device.

The mainboard of the electronic device may include hardware modules such as a central processing unit (central processing unit, CPU) and an image processor (image signal processor, ISP). The mainboard may be configured to provide a power supply and a computing resource for a component (for example, a camera or a camera cover) snap-fitted on the mainboard, and control behavior of the component.

In some embodiments, the focus motor may push the lens to move in space between the battery cover and the mainboard. In this way, the image distance may be changed, to implement focusing on objects at different distances. A maximum moving stroke of the focus motor is limited by a distance between the battery cover and the mainboard. When the electronic device is thin, the distance between the battery cover and the mainboard is short, and the focus motor cannot push the lens to a position far away from the photosensitive sensor. As a result, the image distance of the camera module is small. It can be learned from the foregoing Gaussian imaging formula that the camera module cannot focus on an object at a close position. Focusing effect of the camera module is poor, affecting image shooting experience of a user. If a moving stroke of the focus motor needs to be increased, a thickness of the electronic device needs to be increased. In this way, although the camera module can focus on an object at a shorter distance, the electronic device is thick, and the camera module is very prominent.

As shown in FIG. 2B, an electronic device may further include a camera cover. The camera cover may be connected to a battery cover to protect an internal structure of the electronic device. The camera cover may be a lifting apparatus. The camera cover may be disposed at a position corresponding to a camera module. When a camera application is started, the electronic device may move the camera cover toward the outside of the battery cover, to provide larger space for the camera module. In this way, a focus motor can push a lens to move in space between the camera cover and a mainboard. Because the camera cover can rise to a position outside the battery cover, the focus motor can also push the lens to move outside the battery cover. In addition, after rising to the position outside the battery cover, the camera cover can protect the camera module in a working state. For example, the camera cover can protect the camera module, to reduce a case in which the camera module is damaged due to collision. Moreover, the camera cover is also waterproof and dustproof. An optical signal may be received by the lens through the camera cover, and then converged on a photosensitive sensor by the lens.

When the camera application is closed, the focus motor can push the lens back to an initial position, and the camera cover back to an initial position. The initial position of the camera cover may be a position parallel to the battery cover or a position slightly higher than the battery cover. In this way, when the camera application does not need to be used, the electronic device may have a small thickness. The focus motor and the camera cover may move independently. The initial position of the focus motor and the initial position of the camera cover are not limited in this embodiment of this application.

It can be learned that the camera cover may enable the focus motor to push the lens to move to a farther position. A moving stroke of the focus motor may not be limited by the thickness of the electronic device. This can increase a focusing range of the camera module. The camera module can focus on an object at a long distance, and can also focus on an object at a shorter distance.

The camera cover may also be referred to as a motion lens, a camera protective cover, or the like.

In some embodiments, a size of the photosensitive sensor in the camera module is large. A larger size of the photosensitive sensor indicates a larger photosensitive area, more captured light, and richer information recorded in a photo. A large-sized photosensitive sensor can bring better color accuracy, low-light performance, and noise control. A camera module with the large-sized photosensitive sensor may be referred to as a large-format camera module or a large-format module. Although imaging quality of the large-format camera module is high, the large-format camera module needs larger space. In order to make full use of the large-sized sensor for imaging, the focus motor also needs to have a longer moving stroke.

The electronic device with the camera cover shown in FIG. 2B can meet an imaging requirement of the large-format camera module.

When the electronic device with the camera cover starts the camera application, the electronic device needs to move both the camera cover and the focus motor to respective target positions. The target position to which the camera cover is to move may be a farthest position to which the camera cover can be retracted. The target position of the focus motor may be preset or determined based on an initial image captured by the camera module. The focus motor usually moves faster than the camera cover.

In some embodiments, to avoid sound collision between the camera cover and the focus motor in moving processes, the electronic device may first move the camera cover to the target position of the camera cover, and then move the focus motor to the target position of the focus motor. However, it takes some time to move both the camera cover and the focus motor to respective target positions. This causes slow focusing of the camera module. Image content of first several frames of images displayed after the electronic device starts the camera application may be blurred because the focus motor does not move to the target position.

Alternatively, to increase a focusing speed, the electronic device starts to move the focus motor before the camera cover moves to the target position of the camera cover. Because the focus motor moves faster than the camera cover, the focus motor may push a lens to collide and make a sound with the camera cover, causing abnormal sounds. This may damage the camera module and affect experience of a user in using the camera application.

An embodiment of this application provides a focusing method, to dynamically adjust a movement track of a focus motor based on movement of a camera cover, and balance a relative position between the camera cover and the focus motor, thereby implementing quick focusing after a camera application is started, and reducing collision between the focus motor and the camera cover. The collision between the focus motor and the camera cover may mean that the focus motor pushes the lens to collide with the camera cover, or may mean that a camera module collides with the camera cover.

When the camera application is started, an electronic device may determine a target position of the focus motor, and start to move the camera cover in a direction of a target position of the camera cover. The electronic device may detect a moving position of the camera cover at intervals. There may be a distance, for example, a first distance, between the focus motor and the camera cover, to avoid collision between the camera module and the camera cover in a moving process of the focus motor. For example, when detecting that the camera cover moves to a position Y1, the electronic device may determine whether a distance between the target position of the focus motor and the position Y1 is less than the first distance. The distance between the focus motor and the camera cover being greater than or equal to the first distance can ensure that the focus motor pushes the lens without colliding with the camera cover. If the distance between the target position of the focus motor and the position Y1 is greater than or equal to the first distance, the electronic device may move the focus motor to the target position of the focus motor, to complete focusing. If the distance between the target position of the focus motor and the position Y1 is less than the first distance, the electronic device may move the focus motor to a safety position corresponding to the position Y1, and continue to move the camera cover. A distance between the position Y1 and the safety position corresponding to the position Y1 is greater than or equal to the first distance. After a period of time, the electronic device may detect a moving position of the camera cover again, and move the focus motor based on a relationship between the position of the camera cover and the target position of the focus motor. The electronic device may detect the position of the camera cover for a plurality of times, to adjust a position of the focus motor, so that the focus motor moves to the target position of the focus motor.

The first distance may indicate a safety distance between the focus motor and the camera cover. When the focus motor keeps the safety distance from the camera cover, collision between the focus motor and the camera cover can be avoided. A value of the first distance is not limited in this embodiment of this application.

It can be learned that the electronic device may move the focus motor in a process of moving the camera cover. The electronic device may detect the position of the camera cover for a plurality of times, to move the focus motor for a plurality of times, thereby avoiding collision between the focus motor and the camera cover. Once it is detected that a safety position corresponding to the position of the camera cover exceeds the target position of the focus motor, the electronic device may quickly move the focus motor to the target position of the focus motor, to complete focusing. In other words, the electronic device starts to move the focus motor without waiting for the camera cover to move to the target position of the camera cover. This can increase a focusing speed after the electronic device starts the camera application, and also reduce collision between the focus motor and the camera cover in a focusing process.

The following describes a structure of an electronic device 100 in this application.

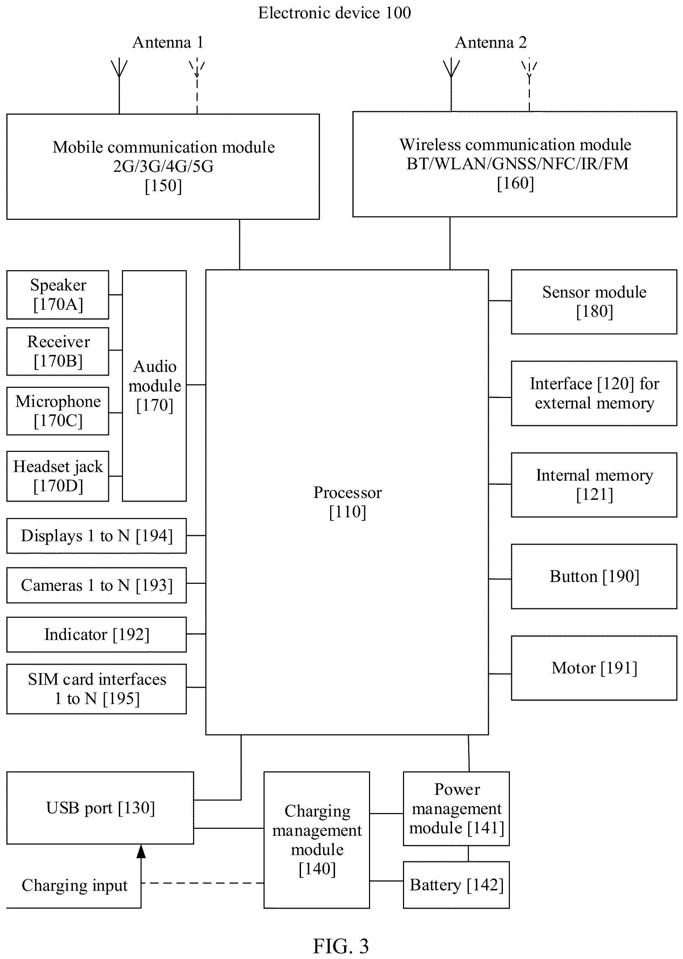

**FIG. 3 is an example of a diagram of a structure of the electronic device 100 according to this application.**

As shown in FIG. 3, the electronic device 100 may include a processor 110, an interface 120 for external memory, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like.

It may be understood that the structure shown in this embodiment of this application does not constitute a specific limitation on the electronic device 100. In some other embodiments of this application, the electronic device 100 may include components more or fewer than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data that has been recently used or cyclically used by the processor 110. If the processor 110 needs to use the instructions or the data again, the processor may directly invoke the instructions or the data from the memory. This avoids repeated access, reduces waiting time of the processor 110, and therefore improves system efficiency.

In this application, the memory may store a computer program, so that the controller or the processor can implement a focusing method in this application through an interface or by using a protocol. For example, the computer program stored in the memory may be used to: determine a target position of a focus motor, control a camera cover and the focus motor to move, detect in real time moving positions of the camera cover and the focus motor, determine a relationship between the target position of the focus motor and a safety position corresponding to a position of the camera cover, perform processing on a shot image, display the shot image, and the like.

The USB port 130 is an interface that conforms to a USB standard specification. The USB port 130 may be configured to connect to a charger to charge the electronic device 100, or may be configured to transmit data between the electronic device 100 and a peripheral device, or may be configured to connect to a headset for playing audio by using the headset.

The charging management module 140 is configured to receive a charging input from a charger. The charger may be a wireless charger or a wired charger. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, to supply power to the processor 110, the internal memory 121, an external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna in a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processor module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

The electronic device 100 implements a display function through the GPU, the display 194, the application processor, and the like. The GPU is a microprocessor for image processing, and is connected to the display 194 and the application processor. The GPU is configured to perform mathematical and geometric computing for graphics rendering.

The display 194 is configured to display an image, a video, and the like. In some embodiments, the electronic device 100 may include one or N displays 194, where N is a positive integer greater than 1.

The electronic device 100 may implement an image shooting function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image.

The camera 193 is configured to capture a static image or a video. An optical image of an object is generated through a lens, and is projected onto a photosensitive element. The photosensitive element may be a CCD or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193, where N is a positive integer greater than 1.

The camera 193 may be the camera modules shown in FIG. 2A and FIG. 2B.

In some embodiments, the electronic device 100 further includes the camera cover shown in FIG. 2B.

The digital signal processor is configured to process a digital signal, and may process another digital signal in addition to the digital image signal. For example, when the electronic device 100 selects a frequency, the digital signal processor is configured to perform Fourier transform and the like on frequency energy.

The NPU is a neural-network (neural-network, NN) computing processor. The NPU quickly processes input information by referring to a structure of a biological neural network, for example, a transfer mode between human brain neurons, and may further continuously perform self-learning. The NPU may be used to implement applications such as intelligent cognition of the electronic device 100, for example, image recognition, facial recognition, voice recognition, and text understanding.

The interface 120 for external memory may be configured to connect to an external memory card, for example, a micro SD card, to extend a storage capability of the electronic device 100. The external memory card communicates with the processor 110 through the interface 120 for external memory, to implement a data storage function. For example, files such as music and videos are stored in the external memory card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a sound playing function or an image playing function), and the like. The data storage area may store data (for example, audio data or an address book) and the like created when the electronic device 100 is used. In addition, the internal memory 121 may include a high-speed random access memory, or may include a nonvolatile memory, for example, at least one magnetic disk storage device, a flash memory device, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some examples, the audio module 170 may be disposed in the processor 110, or some functional modules in the audio module 170 are disposed in the processor 110. The speaker 170A, also referred to as a "loudspeaker", is configured to convert an audio electrical signal into a sound signal. The receiver 170B, also referred to as an "earpiece", is configured to convert an electrical audio signal into a sound signal. The microphone 170C, also referred to as a "mike" or a "mic", is configured to convert a sound signal into an electrical signal. The headset jack 170D is configured to connect to a wired headset.

The sensor module 180 may include a pressure sensor, a gyroscope sensor, a barometric pressure sensor, a magnetic sensor, an acceleration sensor, a gravity sensor, a distance sensor, an optical proximity sensor, a fingerprint sensor, a temperature sensor, a touch sensor, an ambient light sensor, a bone conduction sensor, and the like.

The button 190 includes a power button, a volume button, and the like. The motor 191 may generate a vibration prompt. The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The electronic device 100 interacts with a network through the SIM card, to implement functions such as calling and data communication. In some examples, the electronic device 100 uses an eSIM, namely, an embedded SIM card. The eSIM card may be embedded into the electronic device 100, and cannot be separated from the electronic device 100.

A software system of the electronic device 100 may use a layered architecture, an event-driven architecture, a microkernel architecture, a microservice architecture, or a cloud architecture. In embodiments of this application, an Android® system with a layered architecture is used as an example to describe a software structure of the electronic device 100.

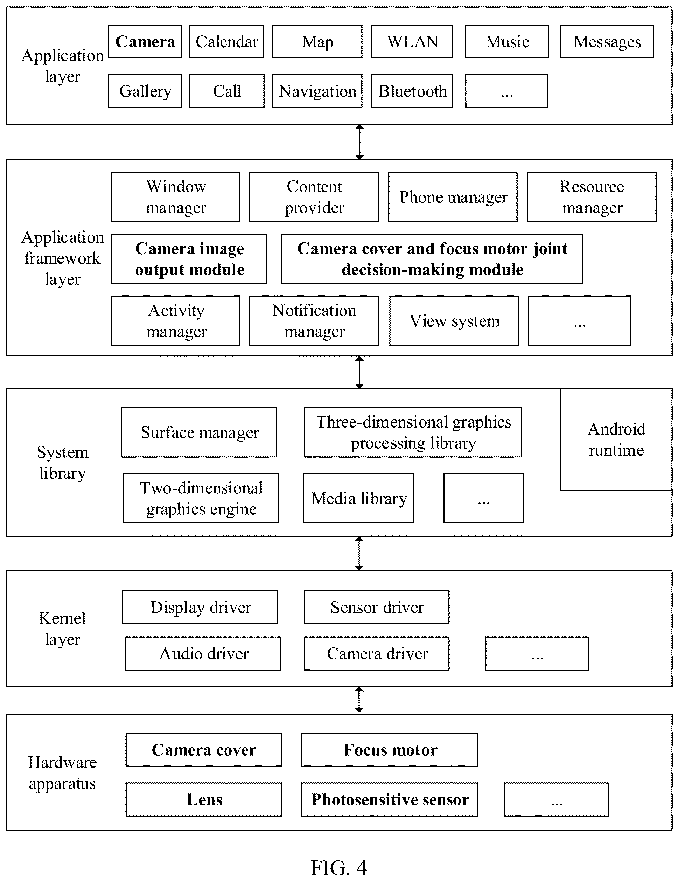

**FIG. 4 is an example of a block diagram of a software structure of the electronic device 100 according to this application.**

In a layered architecture, software is divided into several layers, and each layer has a clear role and task. The layers communicate with each other through a software interface. In some embodiments, an Android® system is divided into four layers: an application layer, an application framework layer, an Android runtime (Android Runtime) and system library, and a kernel layer from top to bottom.

The application layer may include a series of application packages.

As shown in FIG. 4B, the application packages may include applications such as Camera, Gallery, Calendar, Call, Map, Navigation, WLAN, Bluetooth, Music, and Messages.

The application framework layer provides an API and a programming framework for an application at the application layer. The application framework layer includes some predefined functions.

As shown in FIG. 4, the application framework layer may include a window manager, a content provider, a view system, a phone manager, a resource manager, a notification manager, an activity manager, a camera image output module, a camera cover and focus motor joint decision-making module, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and bookmarks, an address book, and the like.

The view system includes visual controls such as a control for displaying a text and a control for displaying a picture. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, a picture, a layout file, and a video file for an application.

The notification manager enables an application to display notification information in the status bar (for example, a pull-down notification bar), and may be configured to transmit a notification-type message. The displayed information may automatically disappear after a short pause without user interaction. For example, the notification manager is configured to: notify download completion, give a message notification, and the like. The notification manager may alternatively be a notification that appears in a top status bar of the system in a form of a chart or scroll bar text, for example, a notification of an application running on the background or a notification that appears on the screen in a form of a dialog window. For example, text information is prompted in the status bar, an alert tone is made, the electronic device vibrates, or an indicator blinks.

The activity manager is responsible for managing an activity (activity), and is responsible for starting, switching, and scheduling each component in a system, and managing and scheduling an application. The activity manager can be invoked by an upper-layer application to start a corresponding activity.

The camera image output module may be configured to convert data collected by the camera module into an image. For example, the camera image output module may obtain an electrical signal generated by a photosensitive sensor in the camera module, and generate an image based on the electrical signal. In some embodiments, the camera image output module may perform one or more processing on an image, for example, cropping, noise optimization, brightness optimization, and filter adjustment. When the focus motor in the camera module moves to a target position of the focus motor, the camera image output module may generate an image with a clear focusing object. The camera image output module may send the generated image to the camera application, and the camera application displays the image in real time on an image shooting interface.

The camera cover and focus motor joint decision-making module may be configured to make a decision on movement of the camera cover and the focus motor, to achieve an objective of increasing a focusing speed and reducing collision between the camera cover and the focus motor. The camera cover and focus motor joint decision-making module may obtain a moving position of the camera cover at intervals, and determine, based on the position of the camera cover, how the focus motor moves. If the target position of the focus motor is less than a safety position corresponding to the position of the camera cover, the camera cover and focus motor decision-making module may indicate the focus motor to move to the target position of the focus motor. If the target position of the focus motor is greater than a safety position corresponding to the position of the camera cover, the camera cover and focus motor decision-making module may indicate the focus motor to move to the safety position corresponding to the position of the camera cover, and continue to move the focus motor after waiting for the camera cover to move for a period of time. In this way, the focus motor can be quickly moved to the target position of the focus motor on a basis of reducing collision between the focus motor and the camera cover. This increases the focusing speed.

The Android runtime includes a core library and a virtual machine. The Android runtime is responsible for scheduling and management of the Android system.

The core library includes two parts: a performance function that needs to be called in Java language and a core library of Android.

The application layer and the application framework layer run in the virtual machine. The virtual machine executes Java files at the application layer and the application framework layer as binary files. The virtual machine is configured to execute functions such as object life cycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats, for example, MPEG 4, H.264, MP3, AAC, AMR, JPG, and PNG.

The three-dimensional graphics processing library is configured to implement three-dimensional graphics drawing, image rendering and synthesis, layer processing, and the like.

The 2D graphics engine is a drawing engine for 2D drawing.

The kernel layer is a layer between hardware and software. The kernel layer includes at least a display driver, a camera driver, an audio driver, and a sensor driver.

FIG. 5 to FIG. 7 are examples of diagrams of some focusing scenarios.

As shown in FIG. 5, when a camera application is not started, both a focus motor and a camera cover are located at initial positions. For example, the initial position of the camera cover may be a position of a battery cover. In some embodiments, when both the focus motor and the camera cover are located at the initial positions, the camera cover and the focus motor do not protrude or slightly protrude on a back of an electronic device 100.

At a moment t1, the electronic device 100 starts the camera application. The electronic device 100 may start the camera application in response to an operation on a camera application icon. Alternatively, the electronic device 100 may start the camera application based on a request of another application for invoking the camera application. For example, applications such as a scan-to-pay application and a video call application may request to invoke the camera application to implement corresponding functions. A trigger condition for starting the camera application by the electronic device 100 is not limited in this embodiment of this application.

When the camera application is started, the electronic device 100 may determine a target position X to which the focus motor is to move. In some embodiments, an initial target position of the focus motor present after the camera application is started may be preset in the electronic device 100. The electronic device 100 may use the initial target position as the target position X. In some embodiments, the electronic device 100 may identify a first frame of image or a first plurality of frames of images that are captured after the camera application is started, and determine the target position X by using the first frame of image or the first plurality of frames of images. A method for determining the target position X is not limited in this embodiment of this application.

When the camera application is started, the electronic device 100 may start to move the camera cover in a direction of a target position Y to which the camera cover is to move. The target position Y to which the camera cover is to move may be preset, and is a farthest position to which the camera cover can move. The electronic device 100 may move, after the camera application is started, the camera cover to the farthest position that the camera cover can reach, and keep the camera cover at the farthest position before the camera application is closed. In this way, sufficient moving space can be provided for the focus motor in an image shooting process. This improves focusing effect of the electronic device 100. Due to a structural design of the camera cover and considering factors such as noise in a moving process of the camera cover, a moving speed of the camera cover is low. In some embodiments, the camera cover may move toward the target position Y at a preset speed. Optionally, the moving speed of the camera cover may remain unchanged.

When the camera application is started, the electronic device 100 may detect a moving position of the camera cover at intervals. The electronic device 100 may periodically or irregularly detect the moving position of the camera cover. That is, a time period between two consecutive times of detecting moving positions of the camera cover by the electronic device 100 may be fixed duration, or may not be fixed duration. For example, the electronic device 100 may detect the moving position of the camera cover once at an interval of preset duration. The preset duration may be a value, for example, 15 milliseconds (milliseconds, ms), 30 ms, or 40 ms. The value of the preset duration is not limited in this embodiment of this application.

In some embodiments, when the camera application is started, in addition to moving the camera cover, the electronic device 100 may further start to move the focus motor. Because an object distance of a focused object may change at any time in an image shooting process, the electronic device 100 needs to quickly adjust a phase distance to implement focusing. A moving speed of the focus motor is high. The focus motor usually moves faster than the camera cover. Time when the focus motor starts to move may be later than that when the camera cover starts to move. For example, when the camera application is started, the electronic device 100 may start to move the camera cover. After the camera cover moves for 10 ms, the electronic device 100 may start to move the focus motor. Duration for which the camera cover moves earlier than the focus motor is not limited in this embodiment of this application. Because the focus motor moves faster than the camera cover, the camera cover starting to move for a brief period of time before the focus motor can better avoid collision between the camera cover and the focus motor.

Alternatively, when the camera application is started, the camera cover and the focus motor may start to move simultaneously. When a distance between the focus motor and the camera cover is greater than a first distance, no collision occurs between the focus motor and the camera cover. That is, the first distance may be a distance that avoids collision between a camera module and the camera cover. The first distance may depend on structural designs of the camera cover, a lens, and the focus motor. A value of the first distance is not limited in this embodiment of this application. When the camera application is not started, the distance between the focus motor and the camera cover may be far greater than the first distance. Therefore, in a case in which the electronic device 100 starts, after the camera application is started, to move the camera cover and the focus motor simultaneously for a period of time, the focus motor usually does not collide with the camera cover. That the focus motor and the camera cover start to move simultaneously can better shorten time for the focus motor to move to the target position of the focus motor, and improve focusing efficiency.

Alternatively, in a time period between starting the camera application and detecting the moving position of the camera cover for a first time, the electronic device 100 may move only the camera cover, and keep the focus motor at the initial position without moving.

In some embodiments, in addition to determining the target position to which the focus motor is to move, after starting the camera application, the electronic device 100 may determine a target position that is of another component in the camera module and to which the component needs to move during focusing. Then, the electronic device 100 may control movement of the focus motor based on movement of the camera cover, so that the another component in the camera module reaches a corresponding target position. For example, the electronic device 100 may determine a target position of the lens after starting the camera application. The electronic device 100 may control movement of the focus motor based on movement of the camera cover, so that the lens moves to the target position of the lens.

With reference to the first distance between the focus motor and the camera cover, when a target position of another component other than the focus motor is obtained, the electronic device 100 may obtain a distance that needs to be kept between the component and the camera cover. In this way, in a process in which the component moves to the target position of the component through movement the focus motor, the electronic device 100 may control movement of the focus motor with reference to the distance that needs to be kept between the component and the camera cover, to reduce collision between the camera module and the camera cover. In subsequent embodiments of this application, the target position of the focus motor and the first distance are used as an example for description.

As shown in FIG. 5, the electronic device 100 may detect a moving position of the camera cover at a moment t2. At the moment t2, the camera cover moves to a position Y1. The electronic device 100 may determine whether a sum of the target position X of the focus motor and the first distance is greater than Y1, that is, determine whether a distance between the target position X and the position Y1 is greater than the first distance. If the sum of the target position X and the first distance is greater than Y1, the focus motor cannot currently directly move to the target position X. Otherwise, the focus motor may collide with the camera cover. Therefore, when the sum of the target position X and the first distance is greater than Y1, the electronic device 100 may move the focus motor toward a position X1. The position X1 is a position obtained by subtracting the first distance from Y1. In other words, the position X1 is a safety position corresponding to the position Y1. In some embodiments, a distance between the safety position corresponding to the position Y1 and the position Y1 may also be greater than the first distance. The position X1 may be a position that is farther from the position Y1 than the position obtained by subtracting the first distance from Y1.

In some embodiments, that the camera cover moves to the position Y1 may indicate that the top of the camera cover moves to the position Y1 (refer to FIG. 5). The camera cover is a lifting apparatus, and the top of the camera cover is also a frontmost position of the camera cover in a lifting process. Optionally, the camera cover has a specific thickness. That the camera cover moves to the position Y1 may also indicate that any part of the camera cover moves to the position Y1. In this application, reference parts used when the camera cover moves to different positions at different moments may be the same. That is, that the camera cover moves to different positions at different moments may indicate that a part of the camera cover moves to these different positions at different moments.

The moment t2 may be a moment at which the electronic device 100 detects the moving position of the camera cover for the first time after starting the camera application. The electronic device 100 may move the focus motor toward the safety position corresponding to the position Y1 (namely, the position X1) between the first time of detection and a second time of detection, and continue to move the camera cover.

As shown in FIG. 5, the electronic device 100 may detect a moving position of the camera cover for the second time at a moment t3. At the moment t3, the camera cover moves to a position Y2, and Y2 is greater than Y1. In other words, the camera cover moves in a direction of the target position Y in a time period from the moment t2 to the moment t3. In addition, at the moment t3, the focus motor has moved to the position X1. In some embodiments, the focus motor may move toward the position X1 in a time period in which the camera cover is at the moment t2 to the moment t3. When moving to the position X1, the focus motor may stop moving, and wait to determine, when a moving position of the camera cover is detected next time, how the focus motor moves subsequently. For example, if the focus motor moves to the position X1 at a moment between the moment t2 and the moment t3, the focus motor may temporarily stop moving after reaching the position X1. The electronic device 100 may determine, based on the moving position of the camera cover at the moment t3, how the focus motor moves.

In some embodiments, the focus motor has a specific thickness. That the focus motor moves to the position X1 may indicate that the top of the focus motor moves to the position X1, or may indicate that the bottom of the focus motor moves to the position X1. This is not limited in this embodiment of this application. That is, that the focus motor moves to the position X1 may indicate that any part of the focus motor moves to the position X1. In this application, reference parts used when the focus motor moves to different positions at different moments may be the same. That is, that the focus motor moves to different positions at different moments may indicate that a part of the focus motor moves to these different positions at different moments.

The electronic device 100 may determine whether the sum of the target position X of the focus motor and the first distance is greater than Y2, that is, determine whether the distance between the target position X and the position Y1 is greater than the first distance. If the sum of the target position X and the first distance is less than or equal to Y2, the focus motor may currently directly move to the target position X without colliding with the camera cover. Therefore, when the sum of the target position X and the first distance is less than or equal to Y2, the electronic device 100 may move the focus motor toward the target position X.

If the position Y2 is less than the target position Y, the camera cover may continue to move after moving to the position Y2 at the moment t3.

As shown in FIG. 5, the electronic device 100 may detect a moving position of the camera cover for a third time at a moment t4. At the moment t4, the camera cover moves to a position Y3, the focus motor has moved to the target position X, and the sum of the target position X and the first distance is less than Y3. The focus motor may remain stationary after moving to the target position X. If the camera cover does not move to the target position Y at the moment t4, the camera cover may continue to move to the target position Y until moving to the target position Y.

It should be noted that duration of a time period from the moment t1 to the moment t2 may be the same as or different from duration of the time period from the moment t2 to the moment t3.

In some embodiments, in a process in which the focus motor moves toward a safety position corresponding to a position of the camera cover during a previous time of detection, the camera cover also continues to move. When the focus motor moves to the safety position corresponding to the position of the camera cover during the previous time of detection, the electronic device 100 may detect a latest moving position of the camera cover, and adjust a position of the focus motor based on the latest moving position. In other words, a moment at which the electronic device 100 detects a position of the camera cover may include a moment at which the focus motor moves to the safety position corresponding to the position of the camera cover during the previous time of detection. For example, in FIG. 5, the moment t3 may be a moment at which the focus motor moves to the position X1. In this way, a time for waiting for a next time of detection after the focus motor moves to a safety position corresponding to a position of the camera cover for one or more times before moving to the target position X can be reduced. In the foregoing embodiment, focusing efficiency can be improved, and the focus motor moves to the target position X more quickly when collision between the focus motor and the camera cover is reduced.

As shown in FIG. 6, after starting a camera application at a moment t1, an electronic device 100 may determine that a target position to which a focus motor is to move is a position X'. The electronic device 100 may detect, at a moment t2, that a camera cover moves to a position Y1. When it is determined that a sum of the target position X' and a first distance is less than or equal to Y1, the electronic device 100 may move the focus motor toward the target position X'. In addition, the electronic device 100 may continue to move the camera cover.

As shown in FIG. 6, at a moment t3, the camera cover moves to a position Y2, and the focus motor has moved to the target position X'. The sum of the target position X' and the first distance is less than Y2. If the position Y2 is less than a target position Y to which the camera cover is to move, the camera cover may continue to move. For example, after the moment t3, the camera cover may continue to move to the target position Y, and move to a position Y3 at a moment t4. When the target position to which the focus motor is to move remains unchanged, the focus motor may stay at the target position X'.

It can be learned from FIG. 5 and FIG. 6 that the electronic device 100 may detect positions of the camera cover for a plurality of times. In a process of detecting the positions of the camera cover for the plurality of times, when detecting that a distance between a position of the camera cover and the target position of the focus motor is less than the first distance, the electronic device 100 may move the focus motor toward a safety position corresponding to the position of the camera cover during this time of detection, and continue subsequent detection. When detecting that a distance between a position of the camera cover and the target position of the focus motor is greater than or equal to the first distance, the electronic device 100 may move the focus motor toward the target position of the focus motor, to complete focusing.

In some embodiments, in a moving process, the camera cover may move in a direction of the focus motor and retract backward. For example, when the camera cover is subject to an external force, the camera cover may be pushed by the external force in the direction of the focus motor, or may be stuck before reaching the target position of the camera cover and cannot continue to move toward the target position of the camera cover. Alternatively, the electronic device 100 may be faulty. As a result, the camera cover moves backward instead of forward, and moves in the direction of the focus motor. The camera cover moves in the direction of the focus motor, and the focus motor moves in a direction of the target position of the focus motor. In this case, the camera cover and the focus motor may move opposite to each other, and the camera cover may collide with the focus motor, hindering movement of the focus motor to the target position of the focus motor. When the focus motor collides with the camera cover, the electronic device 100 may move the focus motor in a direction away from the camera cover based on a relative position relationship between the camera cover and the focus motor, to reduce collision between the focus motor and the camera cover.

Herein, an example in which a target position to which a focus motor is to move is a position X, and a target position to which a camera cover is to move is a position Y is still used for description.

As shown in FIG. 7, at a moment t1, an electronic device 100 starts a camera application, determines a target position X to which the focus motor is to move, and moves the camera cover. The electronic device 100 detects a position of the camera cover for a first time at a moment t2. At the moment t2, the camera cover moves to a position Y1, and a sum of the target position X and a first distance is greater than Y1. The electronic device 100 may move the focus motor toward a position X1. The position X1 is a position obtained by subtracting the first distance from Y1. Optionally, a distance between a safety position corresponding to the position Y1 and the position Y1 may also be greater than the first distance. That is, the position X1 may be a position that is farther from the position Y1 than the position obtained by subtracting the first distance from Y1. For specific statuses of the camera cover and the focus motor at the moment t1 and the moment t2, refer to the descriptions of the embodiment in FIG. 5.

The electronic device 100 detects a position of the camera cover for a second time at a moment t3. At the moment t3, the camera cover moves to a position Y2'. The electronic device 100 may determine that Y2' is less than Y1. In other words, the camera cover moves in a direction of the focus motor in a time period from the moment t2 to the moment t3. However, in the time period from the moment t2 to the moment t3, the focus motor moves in a direction of the camera cover, and needs to move to the position X1. Because the camera cover and the focus motor move opposite to each other, the focus motor may collide with the camera cover before moving to the position X1, or the focus motor may have moved to the position X1 and collide with the camera cover that retracts backward.

The electronic device 100 may determine a position X2 based on the position Y2'. X2 is a position obtained by subtracting the first distance from Y2'. That is, the position X2 is a safety position corresponding to the position Y2'. The electronic device 100 may move the focus motor toward the position X2. Optionally, a distance from the safety position corresponding to the position Y2' to the position Y2' may also be greater than the first distance. That is, the position X2 may be a position that is farther from the position Y2' than the position obtained by subtracting the first distance from Y2'.

As shown in FIG. 7, the electronic device 100 detects a position of the camera cover for a third time at a moment t4. At the moment t4, the camera cover moves to a position Y3'. The electronic device 100 may determine that Y3' is greater than Y2'. In other words, the camera cover moves toward the target position Y in a time period from the moment t3 to the moment t4. The electronic device 100 may determine whether the sum of the target position X and the first distance is less than Y3'. When the sum of the target position X and the first distance is less than or equal to Y3', the electronic device 100 may move the focus motor toward the target position X. In addition, when the camera cover has not moved to the target position Y, the electronic device 100 may continue to move the camera cover toward the target position Y.

The electronic device 100 detects a position of the camera cover for a fourth time at a moment t5. At the moment t5, the camera cover moves to a position Y4, and the focus motor has moved to the target position X. The sum of the target position X and the first distance is less than Y4. In this way, a first time of focusing is completed after the camera application is started.

It can be learned from FIG. 7 that the electronic device 100 may detect, in a moving process of the camera cover, whether the camera cover moves in the direction of the focus motor. When detecting that the camera cover moves in the direction of the focus motor, the electronic device 100 may adjust a position of the focus motor, and move the focus motor in a direction away from the camera cover, to reduce collision between the focus motor and the camera cover.

In some embodiments, when the camera application is started and the camera cover moves in the direction of the focus motor, the electronic device 100 may display prompt information on a screen, to inform a user that an exception occurs in movement of the camera cover. For example, movement of the camera cover in the direction of the focus motor may be caused by an accidental touch of the user on the camera cover. The prompt information for informing the user that the exception occurs in movement of the camera cover can reduce a case in which the camera cover collides with the focus motor because the user accidentally touches the camera cover. Specific content of the prompt information is not limited in this application. For example, the prompt information may include but is not limited to content for prompting the user to check whether the camera cover is blocked or stuck by an obstacle, content for prompting the user to restart the camera application, and the like.

In some embodiments, the target position to which the focus motor is to move may change with an object distance of a focused object. In addition, in response to a user operation of switching the focused object, the electronic device 100 may also update, based on an object distance of a switched focused object, the target position to which the focus motor is to move. When the camera application is started, the electronic device 100 may determine an initial target position of the focus motor. Before the focus motor moves to the initial target position, if the target position of the focus motor is updated, the electronic device 100 may move the focus motor to an updated target position based on the updated target position.

For example, when the camera application is started, the electronic device 100 may determine that the initial target position of the focus motor is a position X. Refer to FIG. 5. The electronic device 100 moves the focus motor toward a position X1 between the moment t2 and the moment t3. That is, the focus motor has not moved to the target position X. Between the moment t2 and the moment t3, the electronic device 100 detects an event for updating the target position of the focus motor. The event may be triggered by a change of the object distance caused by a change of a position of the focused object, or may be triggered by a user operation for switching the focused object. A trigger condition of the event for updating the target position of the focus motor is not limited in this embodiment of this application.

For example, the target position of the focus motor is updated from the position X to 2X.

When the target position of the focus motor is updated to 2X, at the moment t3 shown in FIG. 5, the electronic device 100 may determine whether a sum of the updated target position 2X and the first distance is less than Y2. If the sum of the target position 2X and the first distance is greater than Y2, the electronic device 100 may move the focus motor to a safety position corresponding to the position Y2. The safety position corresponding to the position Y2 may be a position obtained by subtracting the first distance from Y2.

Further, at the moment t4 shown in FIG. 5, the electronic device 100 detects that the camera cover moves to a position Y3. When Y3 is greater than Y2, the electronic device 100 may determine whether the sum of the target position 2X and the first distance is less than Y3. If the sum of the target position 2X and the first distance is less than or equal to Y3, the electronic device 100 may move the focus motor toward the target position 2X. If the sum of the target position 2X and the first distance is greater than Y3, the electronic device 100 may move the focus motor to a safety position corresponding to the position Y3, and subsequently continue to detect a position of the camera cover, to move the focus motor based on the position of the camera cover, thereby quickly moving the focus motor to the target position 2X of the focus motor on a basis of reducing collision between the focus motor and the camera cover.

For another example, the position of the focus motor is updated from the position X to X/2.

After the electronic device 100 shown in FIG. 5 detects, at the moment t2, that the camera cover moves to a position Y1, the electronic device 100 may move the focus motor toward a safety position X1 corresponding to the position Y1. If the electronic device 100 determines, in the time period from the moment t2 to the moment t3, that the target position of the focus motor is updated to X/2, the electronic device 100 may determine whether a sum of the target position X/2 and the first distance is less than Y1. If the sum of the target position X/2 and the first distance is less than or equal to Y1, the electronic device 100 may adjust the position of the focus motor, and move the focus motor toward the updated target position X/2. In this way, at the moment t3 shown in FIG. 5, the focus motor may be in a state in which the focus motor has moved to the target position X/2, or in a state in which the focus motor is about to move to the target position X/2. The electronic device 100 may no longer need to compare a moving position Y2 of the camera cover at the moment t3 with the target position of the focus motor.

Alternatively, when the target position of the focus motor is updated to X/2 in the time period from the moment t2 to the moment t3, the electronic device 100 may still continue to move the focus motor toward the safety position X1 corresponding to the position Y1. After detecting, at the moment t3, that the camera cover moves to a position Y2, the electronic device 100 may determine whether a sum of the updated target position X/2 of the focus motor and the first distance is less than Y2. If the sum of the target position X/2 and the first distance is less than or equal to Y2, the electronic device 100 may move the focus motor from the position X1 to the target position X/2.

In other words, when detecting that the target position of the focus motor is updated, the electronic device 100 may immediately adjust a position of the focus motor based on a relative position relationship between a most recently detected position of the camera cover and the updated target position of the focus motor. Alternatively, when detecting a position of the camera cover next time, the electronic device 100 may adjust a position of the focus motor based on a relative position relationship between the position of the camera cover and the updated target position of the focus motor.

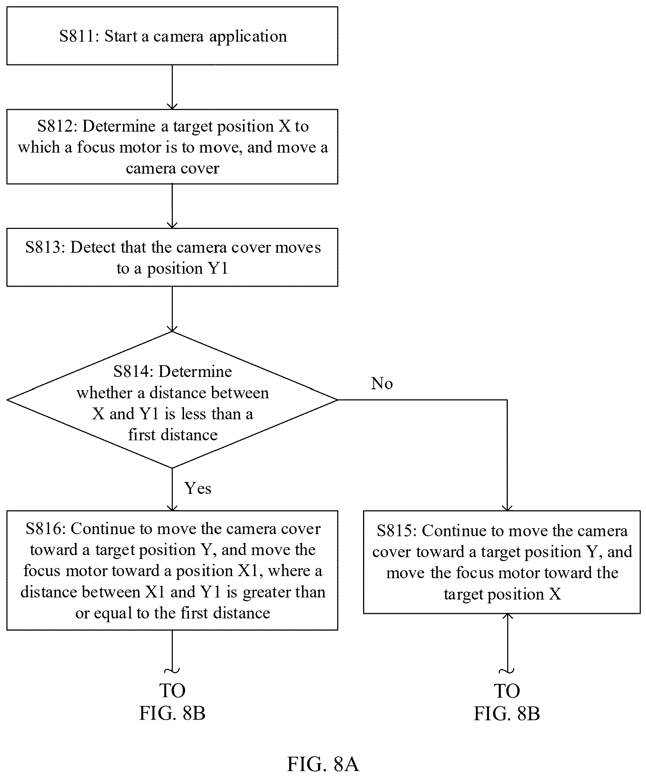

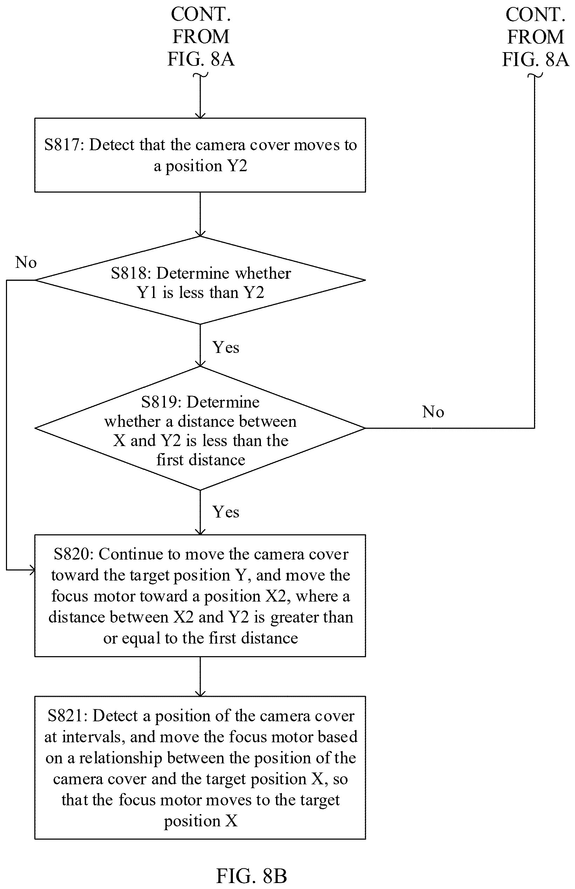

FIG. 8A and FIG. 8B are an example of a flowchart of a focusing method according to this application.

As shown in FIG. 8A and FIG. 8B, the method may include steps S811 to S821.

S811: Start a camera application.

S812: Determine a target position X to which a focus motor is to move, and move a camera cover.

For steps S811 and S812, refer to the descriptions of starting the camera application at the moment t1 by the electronic device 100 shown in FIG. 5.

S813: Detect that the camera cover moves to a position Y1.

S814: Determine whether a distance between X and Y1 is less than a first distance.

A distance between the focus motor and the camera cover is greater than or equal to the first distance, so that collision between the camera cover and a camera module can be avoided. The first distance may indicate a safety distance between the focus motor and the camera cover.

After the camera application is started, the electronic device 100 may detect a position of the camera cover at intervals. When detecting that the camera cover moves to the position Y1, the electronic device 100 may determine whether the distance between X and Y1 is less than the first distance. The distance between the target position X and Y1 is less than the first distance, which may indicate that in this case, that the focus motor moves to the target position X may cause the camera module to collide with the camera cover. The distance between the target position X and Y1 is greater than or equal to the first distance, which may indicate that in this case, that the focus motor moves to the target position X does not cause the camera module to collide with the camera cover.

If the distance between X and Y1 is greater than or equal to the first distance, the electronic device 100 may perform step S815.

If the distance between X and Y1 is less than the first distance, the electronic device 100 may perform step S816.

S815: Continue to move the camera cover toward a target position Y, and move the focus motor toward the target position X.

Moving the focus motor to the target position X may indicate that focusing is completed. After the focus motor moves to the target position X, the camera cover may continue to move until moving to the target position Y.

S816: Continue to move the camera cover toward a target position Y, and move the focus motor toward a position X1, where a distance between X1 and Y1 is greater than or equal to the first distance.

Because the distance between X1 and Y1 is greater than or equal to the first distance, moving the focus motor to the position X1 does not cause the camera module to collide with the camera cover. The position X1 may be determined based on the position Y1. The position X1 may also be referred to as a safety position corresponding to the position Y1.

S817: Detect that the camera cover moves to a position Y2.

After detecting that the camera cover moves to the position Y1, the electronic device 100 may wait for a period of time to detect a position of the camera cover again, and detect that the camera cover moves to the position Y2. In a time period in which the camera cover moves from the position Y1 to the position Y2, the focus motor may move to the position X1, or may not move to the position X1.

S818: Determine whether Y1 is less than Y2.

The electronic device 100 may determine distances from positions of the camera cover that are detected twice consecutively. For example, the electronic device 100 may determine whether Y1 is less than Y2. That Y1 is less than Y2 may indicate that the camera cover moves in a direction of the target position Y of the camera cover, that is, in a process of moving from the position Y1 to the position Y2, the camera cover moves to a position farther from an initial position of the camera cover. That Y1 is greater than Y2 may indicate that the camera cover moves in a direction of the focus motor, that is, in a process of moving from the position Y1 to the position Y2, the camera cover moves to a position closer to an initial position of the camera cover.

If Y1 is less than Y2, the distance between the camera cover and the focus motor increases, and the electronic device 100 may continue to move the focus motor, so that the focus motor is closer to the target position X of the focus motor without colliding with the camera cover. When determining that Y1 is less than Y2, the electronic device 100 may perform step S819.

If Y1 is greater than Y2, the distance between the camera cover and the focus motor decreases, and even the camera cover may collide with the focus motor. When determining that Y1 is greater than Y2, the electronic device 100 may perform step S820.

If Y1 is equal to Y2, the camera cover stays at the position Y1 and does not move. Therefore, the position X1 is also a safety position corresponding to the position Y2. After moving the focus motor to the position X1, the focus motor remains stationary temporarily to avoid collision with the camera cover.

S819: Determine whether a distance between X and Y2 is less than the first distance.

The distance between the target position X and Y2 is less than the first distance, which may indicate that in this case, that the focus motor moves to the target position X may cause the camera module to collide with the camera cover. The distance between the target position X and Y2 is greater than or equal to the first distance, which may indicate that in this case, that the focus motor moves to the target position X does not cause the camera module to collide with the camera cover.

If the distance between X and Y2 is greater than or equal to the first distance, the electronic device 100 may perform step S815. If the distance between X and Y2 is less than the first distance, the electronic device 100 may perform step S820.

S820: Continue to move the camera cover toward the target position Y, and move the focus motor toward a position X2, where a distance between X2 and Y2 is greater than or equal to the first distance.

Because the distance between X2 and Y2 is greater than or equal to the first distance, moving the focus motor to the position X2 does not cause the camera module to collide with the camera cover. The position X2 may be determined based on the position Y2. The position X2 may also be referred to as a safety position corresponding to the position Y2.

When Y1 is greater than Y2, the position X2 is closer to an initial position of the focus motor than the position X1. Therefore, when Y1 is greater than Y2, moving the focus motor toward the position X2 may be moving in a direction away from the camera cover. This reduces collision between the focus motor and the retracting camera cover. For details, refer to the descriptions of movement of the camera cover and the focus motor from the moment t2 to the moment t3 shown in FIG. 7.

When Y1 is less than Y2, the position X2 is farther from an initial position of the focus motor than the position X1. Therefore, when Y1 is less than Y2, moving the focus motor toward the position X2 may be moving in a direction close to the target position of the focus motor. In this way, as the camera cover moves, the focus motor may gradually approach the target position of the focus motor without colliding with the camera cover, to complete focusing.

S821: Detect a position of the camera cover at intervals, and move the focus motor based on a relationship between the position of the camera cover and the target position X, so that the focus motor moves to the target position X.

After detecting that the camera cover moves to the position Y2, the electronic device 100 may wait for a period of time to detect a position of the camera cover again. Then, the electronic device 100 may determine how to move the focus motor based on a relative position relationship between a most recently detected position of the camera cover and a previous detected position of the camera cover, and a relative position relationship between the most recently detected position of the camera cover and the target position of the focus motor. For details, refer to steps S817 to S820.

In the foregoing method, in a moving process of the camera cover, the focus motor may gradually move to the target position of the focus motor on a basis of reducing collision between the camera cover and the focus motor. In this way, collision between the camera cover and the focus motor can be reduced, and focusing efficiency present after the camera application is started can also be improved. By using the foregoing method, the electronic device 100 can quickly complete focusing after the camera application is started, so that a first plurality of frames of images displayed after the camera application is started are images with clear focused objects.

In some embodiments, in an entire process in which the camera application is started, the electronic device 100 may detect a position of the camera cover at intervals, and compare a relative position relationship between the position of the camera cover and the target position of the focus motor. If a difference between the position of the camera cover and the target position of the focus motor is less than the first distance, the electronic device 100 may move the focus motor to a safety position corresponding to the current position of the camera cover, or retract the focus motor to the initial position of the focus motor. This can reduce collision between the focus motor and the camera cover. If a difference between the position of the camera cover and the target position of the focus motor is greater than or equal to the first distance, the electronic device 100 may quickly move the focus motor to the target position of the focus motor, to implement focusing.

In the foregoing embodiment, in an entire process of image shooting by using the camera application, collision between the camera cover and the focus motor caused by abnormal movement of the camera cover (that is, before the camera application is closed, the camera cover retracts and moves toward the initial position of the camera cover) can be reduced.

In some embodiments, the electronic device 100 may stop detecting the position of the camera cover after the camera cover moves to the target position of the camera cover. It may be understood that the target position of the camera cover is a farthest position to which the camera cover can move. When the camera cover is at the target position of the camera cover, the camera cover does not collide with the focus motor. The electronic device 100 may directly move the focus motor to the target position of the focus motor. In the foregoing embodiment, power consumption of the electronic device 100 can be reduced.

It should be noted that, if no contradiction or conflict occurs, any feature or any part of any feature in any embodiment of this application may be combined, and a combined technical solution also falls within the scope of embodiments of this application.

The foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

**Claims**

1. A focusing method, wherein the method is applied to an electronic device, the electronic device comprises a camera module and a camera cover, the camera module comprises a focus motor, and the method comprises:

starting, by the electronic device, a camera application, and determining a first target position to which the focus motor is to move;
moving, by the electronic device, the camera cover; and
when the camera cover moves to a first position and a distance between the first position and the first target position is greater than or equal to a first distance, moving, by the electronic device, the focus motor to the first target position, wherein the first position is less than a target position of the camera cover.

2. The method according to claim 1, wherein before the camera cover moves to the first position, the method further comprises:
when the camera cover moves to a second position and a distance between the second position and the first target position is less than the first distance, moving, by the electronic device, the focus motor to a third position, wherein a distance between the second position and the third position is greater than or equal to the first distance.

3. The method according to claim 2, wherein before the camera cover moves to the first position, the method further comprises:

in a process in which the focus motor moves toward the third position, continuing, by the electronic device, to move the camera cover; and
when the camera cover moves to a fourth position and a distance between the fourth position and the third position is less than the first distance, moving, by the electronic device, the focus motor to a fifth position, wherein a distance between the fourth position and the fifth position is greater than or equal to the first distance.

4. The method according to claim 3, wherein after the camera cover moves to the fourth position, the method further comprises:
displaying, by the electronic device, first prompt information, wherein the first prompt information is used to inform a user that an exception occurs in movement of the camera cover.

5. The method according to claim 2, wherein before the camera cover moves to the first position, the method further comprises:

in a process in which the focus motor moves toward the third position, continuing, by the electronic device, to move the camera cover; and
when the camera cover moves to a sixth position, a distance between the sixth position and the third position is greater than the distance between the second position and the third position, and a distance between the sixth position and the first target position is less than the first distance, moving, by the electronic device, the focus motor to a seventh position, wherein a distance between the sixth position and the seventh position is greater than or equal to the first distance.

6. The method according to claim 5, wherein before the camera cover moves to the sixth position, the method further comprises:
when the focus motor moves to the third position, pausing, by the electronic device, movement of the focus motor.

7. The method according to any one of claims 1 to 6, wherein after starting, by the electronic device, the camera application, the method further comprises:
starting, by the electronic device after a first time period of starting to move the camera cover, to move the focus motor, or starting to move the camera cover and the focus motor simultaneously.

8. The method according to any one of claims 1 to 7, wherein after the camera cover moves to the first position, the method further comprises:
continuing, by the electronic device, to move the camera cover until moving the camera cover to the target position of the camera cover.

9. The method according to claim 8, wherein after moving the camera cover to the target position of the camera cover, the method further comprises:

keeping, by the electronic device, the camera cover at the target position of the camera cover; and
when a target position to which the focus motor is to move changes from the first target position

**EP 4 741 919 A1**

to a third target position, moving, by the electronic device, the focus motor to the third target position.

10. The method according to any one of claims 1 to 9, wherein the first distance is a safety distance between the focus motor and the camera cover.

11. An electronic device, wherein the electronic device comprises a camera module, a camera cover, a memory, and a processor, the camera module is configured to shoot an image, the camera module comprises a lens and a focus motor, the focus motor is configured to push the lens to implement focusing, the camera cover is configured to: provide moving space for the camera module and protect an internal structure of the electronic device, the memory is configured to store a computer program, and the processor is configured to invoke the computer program, so that the electronic device performs the method according to any one of claims 1 to 10.

12. A computer-readable storage medium, wherein the computer-readable storage medium stores instructions, and when the instructions are run on an electronic device, the electronic device is enabled to perform the method according to any one of claims 1 to 10.

13. A computer program product, wherein the computer program product comprises computer instructions, and when the computer instructions are run on an electronic device, the electronic device is enabled to perform the method according to any one of claims 1 to 10.

FIG. 1

FIG. 2A

Lens

Camera cover

Battery cover

Battery cover

Focus motor

Photosensitive
sensor

Mainboard

FIG. 2B

Electronic device 100

FIG. 3

| | | | | | |
|---|---|---|---|---|---|
| **Application layer** | **Camera** | Calendar | Map | WLAN | Music | Messages |
| | Gallery | Call | Navigation | Bluetooth | ... | |

| | | | | |
|---|---|---|---|---|
| **Application framework layer** | Window manager | Content provider | Phone manager | Resource manager |
| | **Camera image output module** | **Camera cover and focus motor joint decision-making module** | | |
| | Activity manager | Notification manager | View system | ... |

| | | | |
|---|---|---|---|
| **System library** | Surface manager | Three-dimensional graphics processing library | Android runtime |
| | Two-dimensional graphics engine | Media library | ... | |

| | | | |
|---|---|---|---|
| **Kernel layer** | Display driver | Sensor driver | |
| | Audio driver | Camera driver | ... |

| | | | |
|---|---|---|---|
| **Hardware apparatus** | **Camera cover** | **Focus motor** | |
| | **Lens** | **Photosensitive sensor** | ... |

FIG. 4

Target position
Y to which a
camera cover is
to move

Position of a
battery cover

Target position
X to which a
focus motor is
to move

Camera cover

Camera cover  Camera cover  Position Y1

Camera cover

Position Y2

Camera cover  Position
Y3

Camera cover

First
distance

First
distance

First
distance

Lens

Lens

Lens

Lens

Lens

Focus motor

Focus motor

Focus motor

First
distance

Lens

Focus motor

Focus motor

Position
X1

Focus motor

| Photosensitive sensor | Photosensitive sensor | Photosensitive sensor | Photosensitive sensor | Photosensitive sensor |
|---|---|---|---|---|

A camera application
is not started

At a moment t1, the camera
application is started, the
target position to which the
focus motor is to move is
determined, and the camera
cover moves

At a moment t2, the camera
cover moves to the position Y1,
a sum of the target position X
and the first distance is greater
than Y1, the focus motor moves
toward the position X1, and the
position X1 is a position
obtained by subtracting the first
distance from Y1

At a moment t3, the camera
cover moves to the position Y2,
Y2 is greater than Y1, the focus
motor is at the position X1, the
sum of the target position X
and the first distance is less
than Y2, and the focus motor
moves toward the target
position X

At a moment t4, the camera
cover moves to the position
Y3, the focus motor is at the
target position X, and the
sum of the target position X
and the first distance is less
than Y3

FIG. 5

EP 4 741 919 A1

Target position Y to which a camera cover is to move

Position of a battery cover

Target position X' to which a focus motor is to move

Camera cover

Camera cover

Camera cover    Position Y1

Camera cover

Position Y2

Camera cover

Position Y3

First distance

First distance

Lens

Lens

Lens

Lens

Lens

Focus motor

Focus motor

Focus motor

Focus motor

Focus motor

Photosensitive sensor

Photosensitive sensor

Photosensitive sensor

Photosensitive sensor

Photosensitive sensor

A camera application is not started

At a moment t1, the camera application is started, the target position to which the focus motor is to move is determined, and the camera cover moves

At a moment t2, the camera cover moves to the position Y1, a sum of the target position X' and the first distance is less than Y1, and the focus motor moves toward the target position X'

At a moment t3, the camera cover moves to the position Y2, the focus motor is at the target position X', and the sum of the target position X' and the first distance is less than Y2

At a moment t4, the camera cover moves to the position Y3, and the focus motor stays at the target position X'

FIG. 6

Target position Y to which a camera cover is to move

Camera cover

Position of a battery cover

Target position X to which a focus motor is to move

Camera cover   Camera cover   Position Y1

Camera cover

Position Y2'

Position Y3'

Camera cover   Position Y4

Camera cover

First distance

First distance

First distance

Lens

Lens

Lens

Lens

Lens

Lens

Focus motor

First distance

First distance

Focus motor

Focus motor

Position X2

Focus motor

Focus motor

Focus motor

| Photosensitive sensor | Photosensitive sensor | Photosensitive sensor | Photosensitive sensor | Photosensitive sensor | Photosensitive sensor |

A camera application is not started

At a moment t1, the camera application is started, the target position to which the focus motor is to move is determined, and the camera cover moves

At a moment t2, the camera cover moves to the position Y1, a sum of the target position X and the first distance is greater than Y1, the focus motor moves toward the position X1, and the position X1 is a position obtained by subtracting the first distance from Y1

At a moment t3, the camera cover moves to the position Y2', Y2' is less than Y1, the position X2 is determined, X2 is a position obtained by subtracting the first distance from Y2', and the focus motor moves toward the position X2

At a moment t4, the camera cover moves to the position Y3', Y3' is greater than Y2', the focus motor is at the position X2, the sum of the target position X and the first distance is less than Y3', and the focus motor moves toward the target position X

At a moment t5, the camera cover moves to the position Y4, the focus motor is at the target position X, and the sum of the target position X and the first distance is less than Y4

FIG. 7

S811: Start a camera application

S812: Determine a target position X to which a focus motor is to move, and move a camera cover

S813: Detect that the camera cover moves to a position Y1

S814: Determine whether a distance between X and Y1 is less than a first distance

No

Yes

S816: Continue to move the camera cover toward a target position Y, and move the focus motor toward a position X1, where a distance between X1 and Y1 is greater than or equal to the first distance

S815: Continue to move the camera cover toward a target position Y, and move the focus motor toward the target position X

TO
FIG. 8B

TO
FIG. 8B

FIG. 8A

CONT.
FROM
FIG. 8A

CONT.
FROM
FIG. 8A

S817: Detect that the camera cover moves to a position Y2

S818: Determine whether Y1 is less than Y2

No

Yes

S819: Determine whether a distance between X and Y2 is less than the first distance

No

Yes

S820: Continue to move the camera cover toward the target position Y, and move the focus motor toward a position X2, where a distance between X2 and Y2 is greater than or equal to the first distance

S821: Detect a position of the camera cover at intervals, and move the focus motor based on a relationship between the position of the camera cover and the target position X, so that the focus motor moves to the target position X

FIG. 8B

## INTERNATIONAL SEARCH REPORT

| International application No. |
|---|
| **PCT/CN2024/143471** |

**A.    CLASSIFICATION OF SUBJECT MATTER**

G03B 13/34(2021.01)i

According to International Patent Classification (IPC) or to both national classification and IPC

**B.    FIELDS SEARCHED**

Minimum documentation searched (classification system followed by classification symbols)

IPC: G03B, H05N

Documentation searched other than minimum documentation to the extent that such documents are included in the fields searched

Electronic data base consulted during the international search (name of data base and, where practicable, search terms used)

CNTXT, WPABS, DWPI, VEN, ENTXT, ENTXTC, WPABSC, CNKI: 摄像, 照相, 对焦, 聚焦, 调焦, 盖, 移动, 推动, 碰, 撞, 距离, 位置, camera, focus+, mov+, cover+, hit+, position, distance

**C.    DOCUMENTS CONSIDERED TO BE RELEVANT**

| Category* | Citation of document, with indication, where appropriate, of the relevant passages | Relevant to claim No. |
|---|---|---|
| Y | CN 110798594 A (REALME CHONGQING MOBILE TELECOMMUNICATIONS CORP., LTD.) 14 February 2020 (2020-02-14) <br> description, paragraphs 0031-0082, and figures 1-13 | 1-13 |
| Y | CN 115277989 A (BEIJING XIAOMI MOBILE SOFTWARE CO., LTD.) 01 November 2022 (2022-11-01) <br> description, paragraphs 0002, 0039, and figures 2-5 | 1-13 |
| Y | CN 114257719 A (SAMSUNG ELECTRONICS CO., LTD.) 29 March 2022 (2022-03-29) <br> description, paragraphs 0024-0153, and figures 1-12 | 1-13 |
| Y | CN 117008390 A (NINGBO SUNNY OPTICAL TECHNOLOGY CO., LTD.) 07 November 2023 (2023-11-07) <br> description, paragraphs 0065-0154, and figures 1-12 | 1-13 |
| A | JP 2008233761 A (FUJIFILM CORP.) 02 October 2008 (2008-10-02) <br> entire document | 1-13 |

☐ Further documents are listed in the continuation of Box C.　　☑ See patent family annex.

| \* | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 April 2025** | **09 April 2025** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/143471**

| Patent document cited in search report | | | Publication date (day/month/year) | Patent family member(s) | | | Publication date (day/month/year) |
|---|---|---|---|---|---|---|---|
| CN | 110798594 | A | 14 February 2020 | EP | 3757887 | A1 | 30 December 2020 |
| | | | | WO | 2020259066 | A1 | 30 December 2020 |
| | | | | US | 2020412920 | A1 | 31 December 2020 |
| | | | | US | 11196906 | B2 | 07 December 2021 |
| CN | 115277989 | A | 01 November 2022 | None | | | |
| CN | 114257719 | A | 29 March 2022 | US | 2024231041 | A1 | 11 July 2024 |
| | | | | KR | 20220040310 | A | 30 March 2022 |
| | | | | US | 2022091363 | A1 | 24 March 2022 |
| | | | | US | 11971604 | B2 | 30 April 2024 |
| CN | 117008390 | A | 07 November 2023 | None | | | |
| JP | 2008233761 | A | 02 October 2008 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311866430